Europäisches Patentamt

(19) European Patent Office

Office européen des brevets

(11) Numéro de publication : **0 114 021 B1**

(12) **FASCICULE DE BREVET EUROPÉEN**

(45) Date de publication du fascicule du brevet :
05.04.89

(51) Int. Cl.⁴ : **F 16 B  7/04**, F 16 B  7/18

(21) Numéro de dépôt : **83440063.2**

(22) Date de dépôt : **14.12.83**

(54) **Profilés spéciaux extrudés destinés à la réalisation de noeuds d'assemblage de charpentes et structures, principalement composées d'éléments tubulaires.**

(30) Priorité : **15.12.82 FR 8221161**

(43) Date de publication de la demande :
**25.07.84 Bulletin 84/30**

(45) Mention de la délivrance du brevet :
**05.04.89 Bulletin 89/14**

(84) Etats contractants désignés :
**AT BE CH DE GB IT LI LU NL SE**

(56) Documents cités :
**DE--A-- 1 943 342
DE--A-- 2 100 974
FR--A-- 2 063 501
FR--A-- 2 094 231
US--A-- 1 662 197**

(73) Titulaire : **Roth, Camille Paul
10, rue du Climont
F-67450 Mundolsheim (FR)**

**STRUCTUREST, Sàrl
6, rue Contades
F-67300 Schiltigheim (FR)**

(72) Inventeur : **Roth, Camille Paul
10, rue du Climont
F-67450 Mundolsheim (FR)**
Inventeur : **Hutt, Daniel
6, rue Contades
F-67300 Schiltigheim (FR)**

(74) Mandataire : **Nuss, Pierre
10, rue Jacques Kablé
F-67000 Strasbourg (FR)**

## Description

La présente invention concerne le domaine des dispositifs d'assemblage notamment pour des charpentes et plus généralement pour des structures, totalement ou partiellement tubulaires, et a pour objet des profilés spéciaux extrudés, en alliage d'aluminium ou en tout autre matériau extrudable, qui, après débitage de longueur à la demande et éventuellement perçage et usinage, sont destinés à la réalisation de nœuds d'assemblage plans ou tridimensionnels pour l'exécution de toutes charpentes et toutes structures dans lesquelles la technique d'assemblage par soudure ne peut être employée.

Actuellement, l'assemblage d'ossatures de charpentes métalliques, en particulier tubulaires, est généralement réalisé au moyen d'éléments de forme spéciale adaptés aux profilés à assembler.

Ainsi, la construction de charpentes nécessite un grand nombre d'éléments différents dans leurs formes et dans leurs dimensions, entraînant obligatoirement le maintien d'un stock important et coûteux de ces divers éléments pour subvenir à des besoins ponctuels.

On connaît de DE-A-2 100 874, une structure porteuse de poutres croisées, comprenant des nœuds d'assemblage dans lesquels sont assemblés, de manière rayonnante, des longerons auxquels sont fixés des éléments de liaison. Mais cette réalisation, exclusivement adaptée à des assemblages rayonnants, fait appel à l'utilisation simultanée d'au moins deux types de profilés différents, pouvant être extrudés, la forme de l'un étant, de plus, entièrement dépendante de celle de l'autre.

La présente invention a pour but de pallier ces inconvénients.

Elle a, en effet, pour objet des profilés spéciaux extrudés destinés à la réalisation de nœuds d'assemblage de charpentes et structures, principalement composées d'éléments tubulaires et réalisées en un ou plusieurs matériaux, lesdits profilés se présentant essentiellement sous forme de deux profilés de base, pouvant être exécutés en différentes tailles, à savoir, d'une part, un profilé à section en forme de barrette munie de trous destinés à la fixation ultérieure, et à leur allègement, et, d'autre part, un profilé à section en forme d'embase pourvue d'au moins une partie en saillie, munie d'au moins un trou destiné à la fixation ultérieure, et d'un ou de plusieurs trous d'allègement, les formes et les dimensions de la section transversale desdits profilés étant indépendantes de la forme et des dimensions de la section autant intérieures qu'extérieures des éléments qu'ils sont destinés à assembler, lesdits profilés étant débités à la longueur en fonction des dimensions des sections des éléments de charpente et de structure à assembler et des efforts à transmettre par le nœud d'assemblage à réaliser, et pouvant être utilisés de manière universelle, séparément, ou par combinaison de plusieurs profilés de types et/ou de dimensions différentes, quelles que soient la forme et les dimensions des éléments à assembler.

Selon une caractéristique de l'invention, chaque profilé peut être muni de rainures, en saillie ou non, destinées à simplifier les opérations de traçage et de pointage des trous transversaux réalisés par perçage ultérieur après débitage à la longueur.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en coupe d'un profilé conforme à l'invention ;

la figure 2 représente, en coupe, une variante de réalisation de l'invention, et

les figures 3 à 14 montrent différents nœuds d'assemblage qu'il est possible de réaliser à partir des profilés spéciaux selon l'invention.

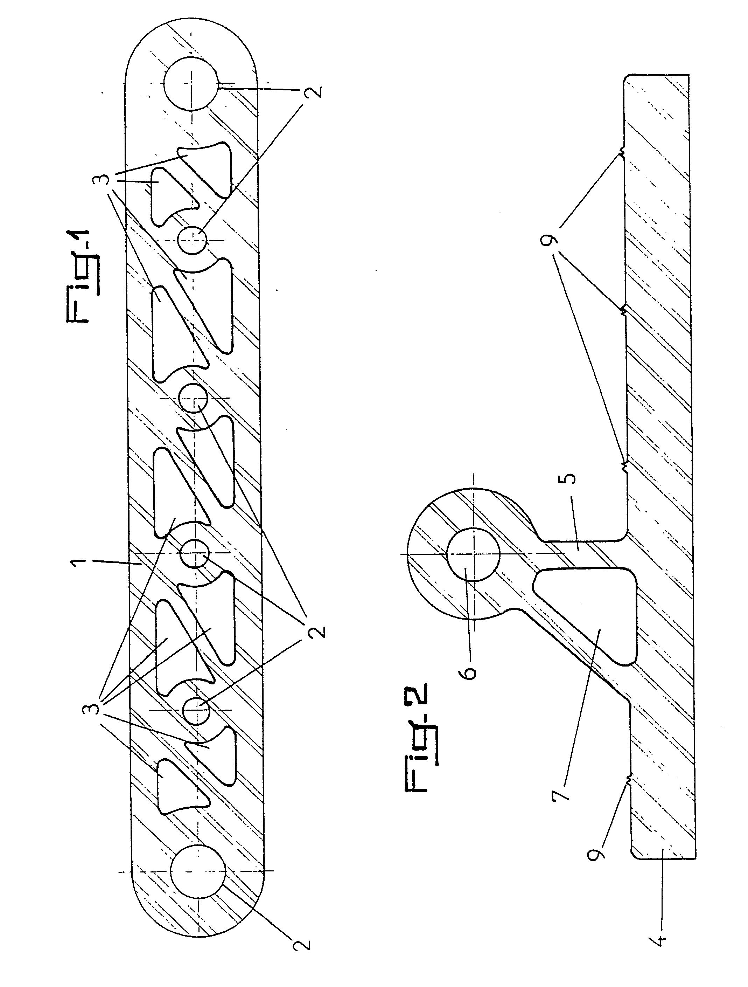

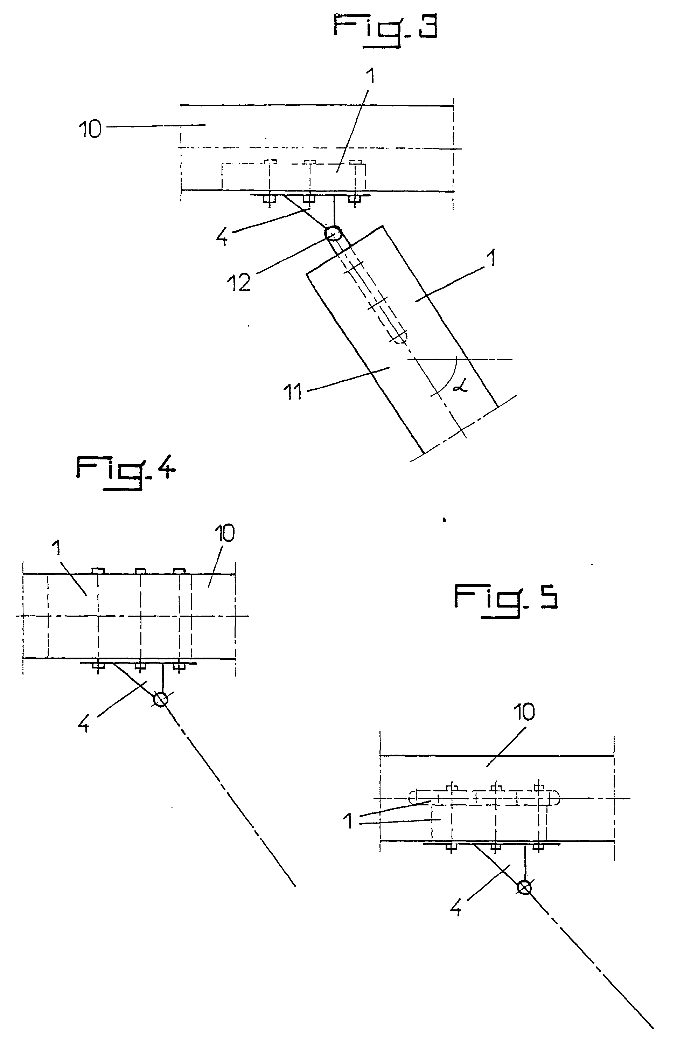

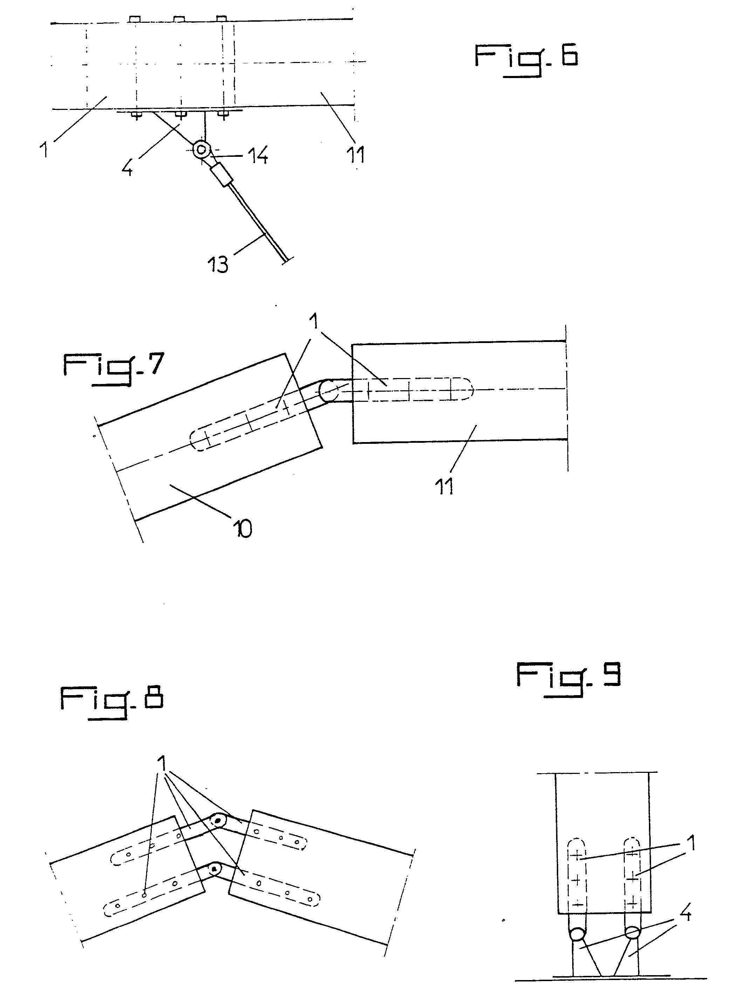

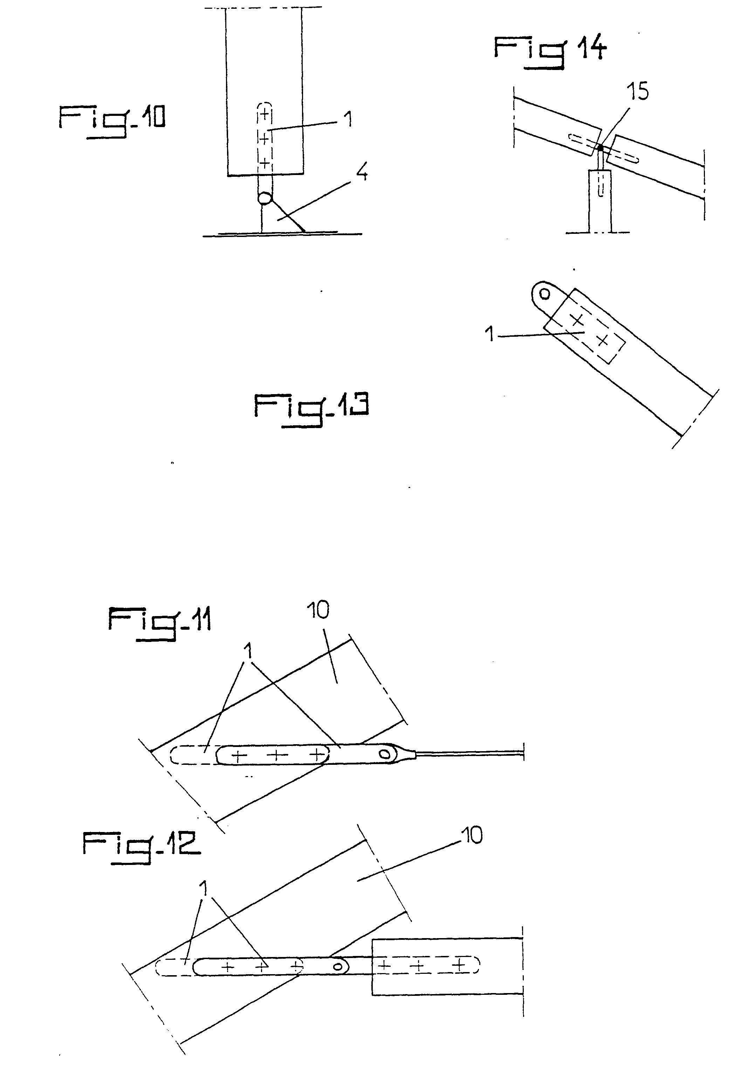

Conformément à l'invention, et comme le montrent plus particulièrement, à titre d'exemples, les figures 1 et 2 des dessins annexés, les profilés spéciaux extrudés en alliage d'aluminium ou en tout autre matériau extrudable, qui, après débitage de longueur à la demande et éventuellement perçage et usinage, sont destinés à la réalisation de nœuds d'assemblage de charpentes ou plus généralement de structures, composées essentiellement d'éléments tubulaires, sont essentiellement constitués sous forme de deux profilés de base, pouvant être réalisés en différentes tailles, à savoir, d'une part, un profilé 1 à section en forme de barrette munie de trous 2 et 3 destinés, respectivement, à la fixation ultérieure et à leur allègement, et, d'autre part, à section en forme d'embase 4 pourvue d'une partie en saillie 5 munie d'un trou 6 destiné à la fixation ultérieure, et d'un trou d'allègement 7.

Les trous 2, situés aux deux extrémités, sont destinés à la réalisation d'articulations au moyen d'une broche permettant l'assemblage de profilés 1 entre eux ou d'un profilé 1 avec un profilé 4 après usinage des extrémités correspondantes en forme de tenon et mortaise, ou en forme de simple emboîtement.

Les trous intermédiaires 2 peuvent être réalisés de plus faible diamètre, et sont destinés à la fixation du profilé sur l'élément de charpente ou de structure à assembler au nœud envisagé, ces trous pouvant être percés au diamètre de broches ou de boulons traversants, ou, après taraudage, de vis, ou encore de goujons, de sorte qu'une bonne précision d'assemblage peut être obtenue.

Le trou 6 du profilé 4 est destiné à assumer les mêmes fonctions que les trous 2 du profilé 1. En outre, ce profilé 4 peut également être réalisé avec plusieurs parties 5 en saillie munies chacune d'un ou de plusieurs trous 6, et il peut présenter plusieurs trous d'allègement 7.

Selon une autre caractéristique de l'invention, les profilés peuvent être munis de rainures 9, en saillie ou non, destinées à simplifier les opérations de traçage et de pointage des trous transversaux qui sont réalisés par perçage ultérieur, généralement après l'opération de débitage à la longueur de ces profilés spéciaux.

Le débitage à la longueur de ces profilés spéciaux est réalisé à la demande, en fonction, d'une part, des dimensions des sections des éléments de charpente et de structure à assembler, et, d'autre part, des efforts à transmettre par le nœud d'assemblage à réaliser.

Ces profilés spéciaux sont étudiés pour qu'une même taille de ces profilés permette d'assembler des éléments de charpente et de structure présentant des sections de formes variées et d'une large gamme de dimensions différentes.

A cet effet, ils sont munis de trous 2 et 6 de dimension minimum pouvant être agrandie par perçage, à concurrence du double de leur surface environ.

Ceci permet l'utilisation de boulons, goujons, vis, broches et axes proportionnés à la taille des éléments de charpente et de structure à assembler.

Les profilés conformes à l'invention peuvent être utilisés, soit extérieurement (profilés 4 et 1) sur des éléments de charpente et de structure pleine ou tubulaires, soit intérieurement (profilé 1) dans des éléments de charpente et de structure tubulaires dans lesquels ils sont enfilés.

Ces profilés sont conçus pour être utilisés soit séparément, soit en combinaison de formes et/ou de tailles ou dimensions pour réaliser de multiples assemblages différents dont le nombre peut être considéré comme pratiquement illimité.

En outre, les deux types de profilés 1 et 4, qui sont des pièces complémentaires, permettent la réalisation de nombreuses variantes.

Les figures 3 à 14 représentent divers modes de réalisation de nœuds d'assemblage au moyen des profilés décrits ci-dessus.

Ainsi, la figure 3 représente un montage de deux tubes 10 et 11 suivant un angle α dans lequel un profilé en barrette 1 est glissé dans le tube 10 et fixé dans ce dernier au moyen de boulons traversant ses trous 2 et serrant un profilé à embase 4, sous forme d'une platine de fixation ou suspente, qui est relié par l'intermédiaire d'un axe 12 à un autre profilé 1 solidaire du tube 11. Le montage de ce profilé 1 dans le tube 11 peut être effectué de manière analogue à celui du profilé du tube 10, ou à la manière d'une entretoise par débitage dudit profilé à une longueur correspondant à la dimension intérieure du tube 11. La liaison entre les profilés 1 et 4 peut être du type à charnière ou à paumelle.

Un tel mode de liaison permet avantageusement la réalisation d'angles α d'une valeur comprise entre 15° et 90° environ.

La figure 6 représente une variante de réalisation de la figure 3, dans laquelle un câble d'entretoisement 13 ou un tirant est relié à un tube 11 au moyen des profilés 1 et 4 précités, le profilé 1 étant avantageusement réalisé sous forme d'entretoise, et le profilé 4 présentant une anse de fixation de l'anneau 14 du câble 13 ou du tirant.

Les figures 4 et 5 montrent des variantes des liaisons suivant les figures 3 et 6 dans lesquelles les nœuds sont destinés à supporter des efforts plus importants que ceux mis en jeu dans le cas desdites figures 3 et 6, et le profilé 1 est sous forme d'une entretoise introduite dans le tube 11 (figure 4), ou encore, deux profilés 1 sont montés en T dans le tube 11 et assemblés entre eux pour assurer une meilleure répartition des efforts, le profilé 4 coopérant avec un autre profilé 1 ou avec un câble 13 ou un tirant.

La figure 7 montre un mode de liaison de deux tubes 10 et 11 bout à bout, au moyen de deux profilés 1 enfilés et serrés chacun dans l'un des tubes et assemblés entre eux par un axe ou une broche. Une telle liaison permet également l'obtention d'angles très différents entre les tubes 10 et 11.

Il peut également être envisagé de compléter la liaison suivant la figure 4 par un autre profilé 4 fixé symétriquement au premier par rapport à l'axe du tube 10. En outre, les dispositifs d'assemblage des figures 4 et 5 peuvent être combinés pour former des assemblages tridimensionnels. De même, en ce qui concerne la figure 7, les boulons de fixation du profilé 1 peuvent également servir à la fixation sur l'extérieur du tube 10 ou/et 11 d'un ou de deux profilés 4.

Dans tous les cas cités ci-dessus les nœuds d'assemblage formaient des rotules, il est cependant possible de réaliser, comme le montre la figure 8, tout aussi simplement, avec les mêmes profilés, des assemblages rigides permettant la transmission de moments de flexion d'une barre sur une autre, par exemple pour la réalisation d'encastrements.

La figure 9 montre la possibilité d'exécuter un tel encastrement en pied de poteau, en utilisant deux profilés 4 inversés faisant office de plaques d'ancrage.

Il est cependant également possible d'utiliser le profilé 4 (figure 10) pour la réalisation d'un appui rotulé. On notera que ce profilé 4 a été spécialement étudié pour permettre le levage du poteau.

Les figures 11 et 12 montrent deux autres possibilités de réalisation de nœuds d'assemblage à l'aide des profilés 1.

La figure 11 représente le cas d'une fixation intérieure avec passage du profilé 1 à travers la paroi même du tube 10, et la figure 12 montre le cas d'une fixation extérieure de deux profilés 1 sur les parois du tube 10, qui est complété à l'intérieur, par une fourrure réalisée également à l'aide du profilé 1.

La figure 13 montre qu'il est également possible, dans le cas de petites sections et de faibles charges, d'utiliser la moitié d'un profilé 1.

Enfin, la figure 14 représente un nœud rotulé 15 muni de barres supplémentaires démontrant l'universalité de l'emploi de profilés spéciaux conformes à l'invention.

Grâce à l'invention, il est possible, à partir d'un nombre très limité de profilés spéciaux, de réaliser une large gamme d'assemblages d'éléments tubulaires ou non, présentant des sections dont la forme et les dimensions peuvent être très différentes, principalement dans les cas où la technique d'assemblage par soudure, pour une raison ou une autre, ne peut être employée.

Ainsi, les stocks de matériaux divers, nécessaires à la réalisation de tels assemblages par les moyens classiques, peuvent être notablement réduits. La rationalisation ainsi obtenue permet une meilleure gestion des stocks et des approvisionnements.

Les profilés conformes à l'invention sont adaptés à tous types d'assemblages de charpentes et de structures, et plus particulièrement à l'assemblage de charpentes et de structures facilement démontables.

Grâce à leur universalité d'emploi, ces profilés sont particulièrement intéressants dans les constructions uniques ou de faibles séries.

Les profilés conformes à l'invention trouvent leur utilisation dans tous les domaines d'assemblage de charpentes ou de structures tubulaires diverses, tels que les jeux de construction, les éléments de mobilier, les bâtiments, les chapiteaux, les pylones, les mats de toutes natures, les stands, les tribunes, les structures de stockage ou d'échafaudages, et analogues.

## Revendications

1. Profilés spéciaux extrudés destinés à la réalisation de nœuds d'assemblage de charpentes et structures, principalement composées d'éléments tubulaires et réalisées en un ou plusieurs matériaux, lesdits profilés se présentent essentiellement sous forme de deux profilés de base, pouvant être exécutés en différentes tailles, à savoir, d'une part, un profilé (1) à section en forme de barrette munie de trous (2, 3) destinés (2) à la fixation ultérieure, et (3) à leur allègement, et, d'autre part, un profilé (4) à section en forme d'embase pourvue d'au moins une partie en saillie (5), munie d'au moins un trou (6) destiné à la fixation ultérieure, et d'un ou de plusieurs trous d'allègement (7), les formes et les dimensions de la section transversale desdits profilés étant indépendantes de la forme et des dimensions de la section autant intérieures qu'extérieures des éléments qu'ils sont destinés à assembler, lesdits profilés étant débités à la longueur en fonction des dimensions des sections des éléments de charpente et de structure à assembler et des efforts à transmettre par le nœud d'assemblage à réaliser, et pouvant être utilisés de manière universelle, séparément, ou par combinaison de plusieurs profilés de types et/ou de dimensions différentes, quelles que soient la forme et les dimensions des éléments à assembler.

2. Profilés, suivant la revendication 1, caractérisés en ce qu'ils sont munis de rainures (9), en saillie ou non, destinées à simplifier les opérations de traçage et de pointage des trous transversaux réalisés par perçage ultérieur après débitage à la longueur.

## Claims

1. Special extruded sections adapted for the construction of assembly joints of frameworks and structures mainly composed of tubular elements and made of one or more materials, said sections appearing essentially in the form of two basic sections which can be made in different sizes, namely, on the one hand, a section (1) with a cross-section in the form of a bar equipped with holes (2, 3) adapted (2) for the subsequent fixing and (3) for lightening them and, on the other hand, a section (4) with a cross-section in the form of a base plate provided with at least one projecting portion (5) equipped with at least one hole (6) adapted for the subsequent fixing and with one or more lightening holes (7), the shapes and the dimensions of the cross-section of said sections being independent of the shape and of the dimensions of both the internal and external cross-section of the elements which they are adapted to assemble, said sections being cut to length depending on the dimensions of the sections of the elements of framework and of structure to be assembled and on the stresses to be transmitted by the assembly joint to be constructed, and being able to be used in a universal manner, separately or by a combination of a plurality of sections of different types and/or dimensions, whatever the shape and the dimensions of the elements to be assembled.

2. Sections according to Claim 1, characterised in that they are equipped with grooves (9), which may or not be projecting, adapted to simplify the operations of marking and checking the transverse holes produced by subsequent drilling after cutting to length.

## Patentansprüche

1. Ausgepresste Profile um Fachwerkknoten und Strukturen herzustellen, hauptsächlich aus rohrförmigen Elementen zusammengestellt und aus einem oder aus mehreren Materialien verwirklicht, wobei diese Profile im wesentlichen zwei, in verschiedenen Grössen herstellbare Grundprofile aufweisen, nämlich einerseits ein im Querschnitt stegartiges Profil (1), das zu seiner späteren Befestigung (2) und zur Gewichtserleichterung (3) mit Löchern (2, 3) versehen ist, und anderseits ein im Querschnitt als Sitz geformtes Profil (4), das mit wenigstens einem zumindest ein für die spätere Befestigung bestimmtes Loch (6) aufweisenden Vorsprung (5) versehen ist, sowie mit einem oder mehreren Löchern (7) zur Gewichtserleichterung, wobei die Formen und Abmessungen des Querschnittes dieser Profile unabhängig von der inneren und äusseren Form bzw. den zugehörigen Abmessungen der daran anzuschliessenden Elemente sind, und wobei die Profile in einer Länge lieferbar sind, die von den Querschnittsabmessungen der anzuschliessenden Fachwerkelemente bzw. Strukturen und von den von den zu bildenden Verbindungsknoten zu übertragenden Kräften abhängig ist, und die Profile universell, jeweils gesondert oder in Kombination mit mehreren Profilen unterschiedlicher Art und/oder Abmessungen anwendbar sind, was immer auch die Form und die Abmessungen der anzuschliessenden Elemente sein mögen.

2. Profile nach Anspruch 1, dadurch gekennzeichnet, dass sie — zum Erleichtern des Anreissens und Ankörnens der durch letztliches Durchbohren nach Erstellung der Länge hergestellten Querlöcher — mit, gegebenenfalls vorspringenden, Rillen versehen sind.

EP 0 114 021 B1

Fig-1

Fig-2

1

EP 0 114 021 B1

# Fig. 3

10   1

4

12

11   1

α

# Fig. 4

1   10

4

# Fig. 5

10

1

4

2

Fig. 6

1

4

14

11

13

Fig. 7

1

1

10

11

Fig. 8

1

Fig. 9

1

4

Fig-10

1

4

Fig 14

15

1

Fig-13

Fig-11

10

1

Fig-12

1

10